# EUROPEAN PATENT APPLICATION

(11) **EP 4 674 653 A1**
(43) Date of publication of application: **07.01.2026**
(21) Application number: 24823060.9
(22) Date of filing: 28.03.2024
(51) Int. Cl.: B60H 1/00, B60H 1/32

(54) **VEHICLE AIR-CONDITIONING SYSTEM**

(30) Priority: 13.06.2023 JP 2023097056
(71) Applicant: AISIN CORPORATION, Kariya-shi, Aichi 448-8650 (JP)
(72) Inventor: MARUYAMA, Koichi, Kariya-shi, Aichi 448-8650 (JP)
(74) Representative: Kramer Barske Schmidtchen Patentanwälte PartG mbB
(86) International application number: PCT/JP2024/012730
(87) International publication number: WO 2024/257437

(57) **Abstract**

A vehicle air conditioning system includes: a coolant module having a coolant flow path through which a coolant that exchanges heat with a refrigerant in a condenser and an evaporator flows; and an air conditioning unit that performs cooling and heating of a vehicle interior. The coolant module is integrated with the air conditioning unit.

## Description

### TECHNICAL FIELD

The present invention relates to a vehicle air conditioning system.

### BACKGROUND ART

Conventionally, a vehicle air conditioning system that performs cooling and heating of a vehicle interior is used. As a technique related to such a vehicle air conditioning system, for example, there is a technique described in Patent Literature 1 which is referred to below.

Patent Literature 1 describes a refrigeration cycle device. The refrigeration cycle device is applied to a vehicle air conditioner. The vehicle air conditioner is configured to be switchable between a cooling mode and a heating mode. In the cooling mode, blown air is cooled in an interior evaporator and cold air is supplied into the interior. On the other hand, in the heating mode, heat is exchanged through a heater core between a refrigerant changed into a high-temperature and high-pressure state by a compressor and cooling water subjected to heat exchange, blown air is heated, and warm air is supplied into the interior.

### CITATIONS LIST

### PATENT LITERATURE

Patent Literature 1: JP 2019-60580 A

### SUMMARY OF INVENTION

### TECHNICAL PROBLEMS

In the vehicle air conditioner described in Patent Literature 1, components such as the interior evaporator and the heater core included in the vehicle air conditioner are disposed throughout the vehicle, such as a cabin and a motor room of the vehicle. For this reason, the cabin space (vehicle interior space) is narrowed, and heat easily dissipates from the refrigerant and the cooling water flowing through a flow path, which deteriorates power cost. Therefore, the vehicle air conditioner described in Patent Literature 1 has room for improvement in terms of improving power cost while securing a vehicle interior space.

Therefore, there is a demand for a vehicle air conditioning system that can improve power cost while securing a vehicle interior space.

### SOLUTIONS TO PROBLEMS

A characteristic configuration of a vehicle air conditioning system according to the present invention includes: a coolant module having a coolant flow path through which a coolant that exchanges heat with a refrigerant in a condenser and an evaporator flows; and an air conditioning unit that performs cooling and heating of a vehicle interior, in which the coolant module is integrated with the air conditioning unit.

With such a characteristic configuration, since the coolant module is integrated with the air conditioning unit, the flow path through which the coolant flows from the condenser to the air conditioning unit and the flow path through which the coolant flows from the evaporator to the air conditioning unit can be easily routed and shortened as compared with a case where the coolant module is not integrated with the air conditioning unit. Therefore, since heat dissipation of the coolant flowing through the flow path can be suppressed, power cost can be improved. In addition, since the vehicle air conditioning system can be downsized, the cabin space (vehicle interior space) can be enlarged.

### BRIEF DESCRIPTION OF DRAWINGS

FIG. 1 is a circuit configuration diagram of a vehicle air conditioning system.
FIG. 2A is a plan view illustrating an arrangement of the vehicle air conditioning system.
FIG. 2B is a side view illustrating the arrangement of the vehicle air conditioning system.
FIG. 3 is a diagram illustrating a flow of a coolant in a first state.
FIG. 4 is a diagram illustrating a flow of the coolant in a second state.
FIG. 5 is a diagram illustrating states of a switching valve.

### DESCRIPTION OF EMBODIMENTS

A vehicle air conditioning system according to the present invention is configured to be able to perform cooling and heating of a vehicle interior. Hereinafter, a vehicle air conditioning system A of the present embodiment will be described. However, the vehicle air conditioning system A is not limited to the following embodiments, and various modifications can be made without departing from the gist thereof.

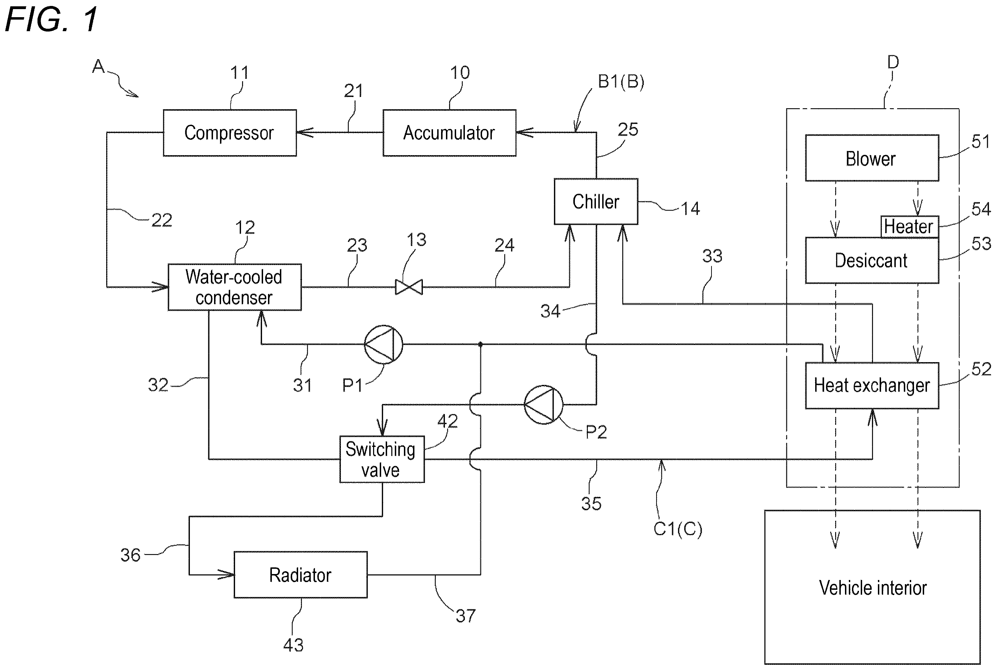

FIG. 1 is a diagram illustrating a circuit configuration of the vehicle air conditioning system A. The vehicle air conditioning system A is mounted on a vehicle, and includes a refrigerant module B, a coolant module C, and an HVAC (Heating, Ventilation, and Air Conditioning) unit (an example of an "air conditioning unit") D as illustrated in FIG. 1. The refrigerant module B is provided with a refrigerant flow path B1 and is configured as a refrigerant manifold. In addition, the coolant module C is provided with a coolant flow path C1 and is configured as a coolant manifold. Here, the manifold is a flow path housing in which a plate member is stacked and sealed on a housing body in which the coolant flow path C1 or the refrigerant flow path B1 is carved. The flow path housing is formed of a metal material having high thermal conductivity including aluminum.

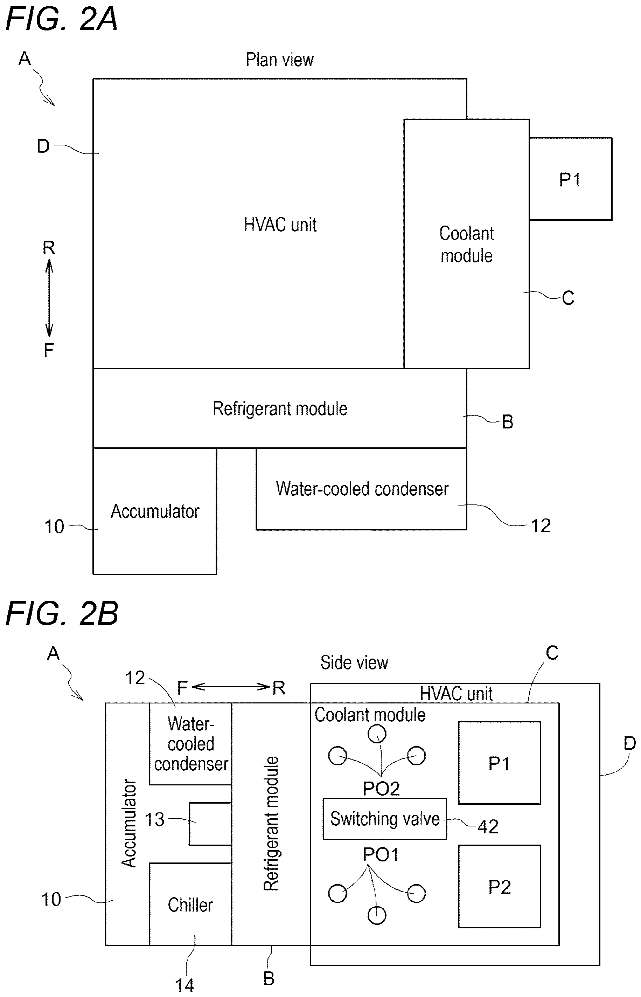

A refrigerant such as hydrofluorocarbon (HFC) or hydrofluoroolefin (HFO) flows through the refrigerant flow path B1, and a coolant including an antifreeze liquid containing ethylene glycol or the like as a main component, cooling water such as a long life coolant, or an insulating oil such as paraffin flows through the coolant flow path C1. FIGS. 2A and 2B illustrate the arrangement of the refrigerant module B, the coolant module C, and the HVAC unit D in the vehicle air conditioning system A. FIG. 2A is a plan view, and FIG. 2B is a side view. In addition, in FIGS. 2A and 2B, the front side in the traveling direction of the vehicle in a state where the vehicle air conditioning system A is mounted on the vehicle is indicated as F, and the rear side in the traveling direction is indicated as R. The coolant module C is provided with ports PO1, PO2 through which the coolant is introduced and discharged.

As illustrated in FIGS. 1, 2A, and 2B, the refrigerant flow path B1 circulates the refrigerant across a water-cooled condenser (an example of a "condenser") 12 and a chiller (an example of an "evaporator") 14. The refrigerant module B is configured to allow the refrigerant to flow between an accumulator 10, a compressor 11, the water-cooled condenser 12, an expansion valve 13, and the chiller 14 through the refrigerant flow path B1.

The accumulator 10 stores the liquid refrigerant and performs gas-liquid separation of the stored refrigerant. The gaseous refrigerant separated by the accumulator 10 flows through a first refrigerant path 21 and is sent to the compressor 11.

The compressor 11 compresses the refrigerant from the accumulator 10. As a result, the refrigerant becomes a high-temperature compressed gas. The compressor 11 sends the refrigerant that has become the high-temperature compressed gas to the water-cooled condenser 12 through a second refrigerant path 22. Accordingly, the compressor 11 pumps the refrigerant from the accumulator 10 to the water-cooled condenser 12.

The refrigerant that has passed through the compressor 11 flows through the water-cooled condenser 12. The coolant flows into the water-cooled condenser 12 from a first coolant flow path 31, and flows out from a second coolant flow path 32. The first coolant flow path 31 and the second coolant flow path 32 are configured separately from the second refrigerant path 22. The refrigerant from the second refrigerant path 22 is condensed and liquefied by being deprived of heat by the coolant. The liquefied refrigerant is sent to a third refrigerant path 23. Similarly to the second refrigerant path 22, the third refrigerant path 23 is configured separately from the first coolant flow path 31 and the second coolant flow path 32.

In the expansion valve 13, the refrigerant (liquefied refrigerant) flowing through the third refrigerant path 23 is expanded into a low-temperature and low-pressure atomized refrigerant. The atomized refrigerant is sent to a fourth refrigerant path 24.

The refrigerant flows to the chiller 14 through the fourth refrigerant path 24. As described above, the low-temperature and low-pressure atomized refrigerant expanded by the expansion valve 13 flows through the fourth refrigerant path 24, and such a refrigerant is sent to the chiller 14. The coolant subjected to heat exchange in a heat exchanger 52 flows into the chiller 14 from a third coolant flow path 33, and flows out from a fourth coolant flow path 34. The third coolant flow path 33 and the fourth coolant flow path 34 are configured separately from the fourth refrigerant path 24. In the chiller 14, the atomized refrigerant takes heat from the coolant and evaporates. The evaporated and vaporized refrigerant passes through a fifth refrigerant path 25 and flows through the accumulator 10.

In addition, the coolant that exchanges heat with the refrigerant in the water-cooled condenser 12 and the chiller 14 flows through the coolant flow path C1. The coolant module C is configured such that the coolant can flow between the water-cooled condenser 12, the chiller 14, a switching valve 42, a radiator 43, and the heat exchanger 52 through the coolant flow path C1 by a first pump P1 and a second pump P2.

As described above, the coolant flows into the water-cooled condenser 12 from the first coolant flow path 31, and the coolant flows out from the second coolant flow path 32. The first pump P1 is provided in the first coolant flow path 31, and the coolant is sent by the first pump P1.

The switching valve 42 is disposed in the coolant flow path C1, and is configured to allow the coolant to flow therethrough from the water-cooled condenser 12 and the chiller 14. The coolant is sent from the water-cooled condenser 12 to the switching valve 42 through the second coolant flow path 32, and the coolant is sent from the chiller 14 through the fourth coolant flow path 34. The second pump P2 is provided in the fourth coolant flow path 34, and the coolant is sent from the chiller 14 to the switching valve 42 by the second pump P2.

The switching valve 42 is configured to allow the coolant to be sent to a fifth coolant flow path 35 and a sixth coolant flow path 36. The coolant sent from the switching valve 42 to the fifth coolant flow path 35 flows through the heat exchanger 52. The coolant sent to the heat exchanger 52 can be sent to the water-cooled condenser 12 through the first coolant flow path 31, and can be sent to the chiller 14 through the third coolant flow path 33.

In addition, the coolant sent from the switching valve 42 to the sixth coolant flow path 36 flows through the radiator 43. In the radiator 43, heat exchange is performed with outside air, and the coolant is cooled. The coolant subjected to the heat exchange is sent to the first coolant flow path 31 through a seventh coolant flow path 37.

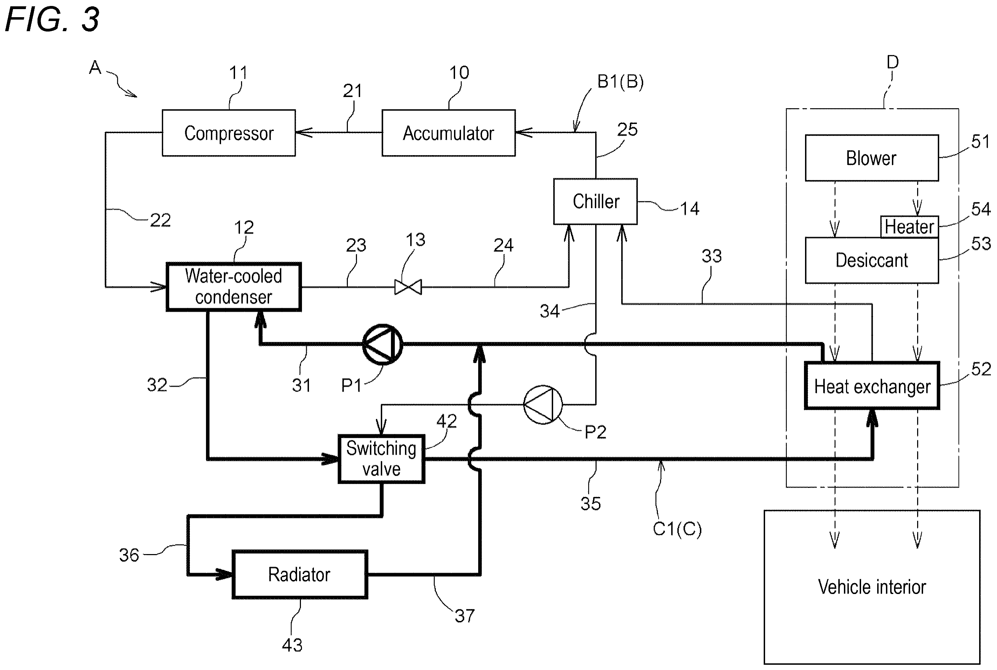

The switching valve 42 is configured to switch the flowing state of the coolant in the coolant flow path C1 between a first state and a second state. The first state is a state in which the coolant is circulated across the water-cooled condenser 12. FIG. 3 illustrates a flowing state of the coolant in the first state described above. As illustrated in FIG. 3, in the first state, the coolant is circulated by the first pump P1 along the water-cooled condenser 12, the second coolant flow path 32, the switching valve 42, the fifth coolant flow path 35, the heat exchanger 52, and the first coolant flow path 31.

At this time, the coolant may be sent from the switching valve 42 to the sixth coolant flow path 36, and may flow so as to return to the first coolant flow path 31 through the radiator 43 and the seventh coolant flow path 37.

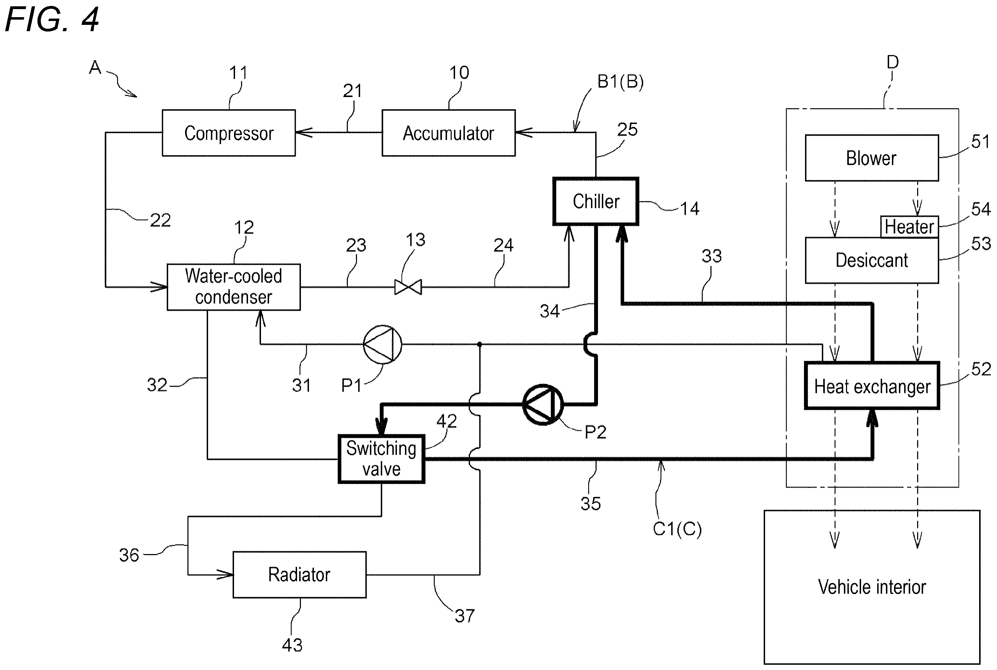

The second state is a state in which the coolant is circulated across the chiller 14. FIG. 4 illustrates a flowing state of the coolant in the second state described above. As illustrated in FIG. 4, in the second state, the coolant is circulated by the second pump P2 along the chiller 14, the fourth coolant flow path 34, the switching valve 42, the fifth coolant flow path 35, the heat exchanger 52, and the third coolant flow path 33.

The switching valve 42 described above is switched between the first state and the second state by a control part (not illustrated) of the vehicle air conditioning system A or a host system of the vehicle air conditioning system A.

Returning to FIG. 1, the HVAC unit D includes a blower 51, the heat exchanger 52, and a desiccant 53, a heater (electric heater) 54. The blower 51 sucks outside air and sends the sucked outside air to the heat exchanger 52.

The heat exchanger 52 performs heat exchange between air and the coolant in order to cool and heat the vehicle interior. The air is outside air sucked by the blower 51. In addition, as described above, the coolant is introduced into the heat exchanger 52 through the fifth coolant flow path 35, and the coolant is sent to one or both of the first coolant flow path 31 and the third coolant flow path 33 according to the state of the switching valve 42 (details will be described later). Therefore, in the heat exchanger 52, heat exchange is performed between the outside air sent from the blower 51 and the coolant supplied through the fifth coolant flow path 35, and the air subjected to the heat exchange is introduced into the vehicle interior. Specifically, in a case where the outside air is cooled in the heat exchanger 52, cold air is introduced into the vehicle interior, and in a case where the outside air is warmed in the heat exchanger 52, warm air is introduced into the vehicle interior. As a result, the vehicle interior can be cooled or heated.

The desiccant 53 adsorbs moisture contained in moisture-containing air to generate warmed dry air. The desiccant 53 functions as an adsorption part that adsorbs moisture, and can be configured using, for example, an adsorbent such as zeolite, silica gel, or activated carbon. The desiccant 53 is provided between the blower 51 and the heat exchanger 52. Therefore, the outside air sent from the blower 51 is discharged to the heat exchanger 52 via the desiccant 53.

The electric heater 54 evaporates moisture adsorbed by the desiccant 53 to generate cooled humidified air. The electric heater 54 functions as a warming part that evaporates moisture adsorbed by the desiccant 53. As illustrated in FIG. 1, the electric heater 54 is assembled to, for example, the desiccant 53 (configured integrally with the desiccant 53). In this case, the desiccant 53 is heated by the electric heater 54, whereby the moisture adsorbed by the desiccant 53 evaporates. Of course, the electric heater 54 may be provided at a position on the upstream side of the desiccant 53 (between the blower 51 and the desiccant 53) and separated from the desiccant 53 (may be provided separately from the desiccant 53) without being assembled to the desiccant 53. In this case, the air from the blower 51 is heated by the electric heater 54, and the heated air is supplied to the desiccant 53, whereby the moisture adsorbed by the desiccant 53 evaporates. The air supplied to the desiccant 53 is humidified by such moisture evaporated from the desiccant 53, and cooled humidified air is generated. The warming part that evaporates the moisture adsorbed by the desiccant 53 may be an air heating device other than the electric heater 54.

When the moisture-containing air is supplied from the blower 51 to the desiccant 53 in a state where moisture is not adsorbed by the desiccant 53, the desiccant 53 adsorbs moisture in the moisture-containing air to lower the humidity of the moisture-containing air. As a result, the moisture-containing air supplied to the desiccant 53 becomes dry air dehumidified by the desiccant 53 and is discharged to the heat exchanger 52.

On the other hand, when air heated by the electric heater 54 or high-temperature air from the blower 51 is supplied to the desiccant 53 in a state where moisture is adsorbed by the desiccant 53, the desiccant 53 desorbs the adsorbed moisture. The desorbed moisture humidifies the high-temperature air. As a result, the high-temperature air supplied to the desiccant 53 becomes wet air humidified by the desiccant 53 and is discharged to the heat exchanger 52.

The heat exchanger 52 performs heat exchange between the warmed dry air or the cooled humidified air and the coolant to generate vehicle interior cooling air or vehicle interior heating air. Therefore, in the heat exchanger 52, heat exchange is performed between the dry air and the coolant introduced through the fifth coolant flow path 35 to generate the vehicle interior cooling air. In addition, in the heat exchanger 52, heat exchange is performed between the wet air and the coolant introduced through the fifth coolant flow path 35 to generate the vehicle interior heating air. Further, in the heat exchanger 52, the vehicle interior heating air can also be generated by performing heat exchange between the dry air and the coolant introduced through the fifth coolant flow path 35. In this case, dehumidified heating air can be supplied into the vehicle interior when a defroster function is used, for example, in winter. By introducing such vehicle interior cooling air and vehicle interior heating air into the vehicle interior, the humidity in the vehicle interior can be adjusted.

Here, as described above, the switching valve 42 is configured such that the coolant from the water-cooled condenser 12 and the coolant from the chiller 14 can flow therethrough. In a case where the coolant from the water-cooled condenser 12 is compared with the coolant from the chiller 14, the temperature of the coolant from the water-cooled condenser 12 is relatively higher than the temperature of the coolant from the chiller 14. Therefore, in a case where the vehicle interior is heated, the switching valve 42 is brought into the first state in which the coolant is circulated across the water-cooled condenser 12, and in a case where the vehicle interior is cooled, the switching valve 42 is brought into the second state in which the coolant is circulated across the chiller 14.

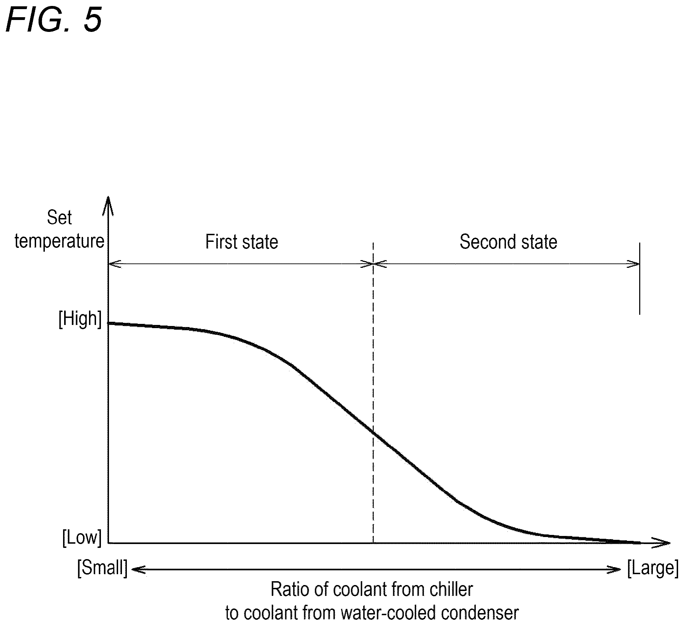

In the present embodiment, the switching valve 42 is configured such that the opening degree is changeable so as to simultaneously realize the first state and the second state. Therefore, in the switching valve 42, the coolant having a relatively high temperature from the water-cooled condenser 12 and the coolant having a relatively low temperature from the chiller 14 can be mixed and sent to the fifth coolant flow path 35. As illustrated in FIG. 5, in a case where the set temperature of air conditioning in the vehicle interior is high, the ratio of the coolant from the chiller 14 to the coolant from the water-cooled condenser 12 may be decreased, and in a case where the set temperature of air conditioning in the vehicle interior is low, the ratio of the coolant from the chiller 14 to the coolant from the water-cooled condenser 12 may be increased. In this manner, by changing the opening degree of the switching valve 42 according to the set temperature of air conditioning in the vehicle interior and controlling the flow rate of the coolant from the second coolant flow path 32 and the flow rate of the coolant from the fourth coolant flow path 34, the temperature of the coolant sent to the fifth coolant flow path 35 is adjusted, and the temperature in the vehicle interior can be adjusted to the set temperature of the air conditioning.

In the present embodiment, as illustrated in FIGS. 2A and 2B, the refrigerant module B and the coolant module C are integrated with the HVAC unit D. Here, "integrated" means a state in which the refrigerant module B and the coolant module C are fixed to the HVAC unit D with bolts or the like. Note that the term "integrated" also includes the case where the HVAC unit D, the refrigerant module B, and the coolant module C are made of the same material to form the same case. Specifically, as illustrated in FIG. 2A, in a state where the HVAC unit D is mounted on the vehicle, the refrigerant module B is provided on the front side of the HVAC unit D in the traveling direction of the vehicle. As described above, by integrating the refrigerant module B and the coolant module C with the HVAC unit D, the flow path through which the coolant flows between the coolant module C and each of the refrigerant module B and the HVAC unit D can be easily routed and shortened as compared with the case where the refrigerant module B and the coolant module C are not integrated with the HVAC unit D. Therefore, the vehicle air conditioning system A can be downsized, and the power cost can be improved. In addition, as illustrated in FIGS. 2A and 2B, since the water-cooled condenser 12, the expansion valve 13, and the chiller 14 can be disposed on the forward side of the vehicle, traveling air can be blown to the water-cooled condenser 12, the expansion valve 13, and the chiller 14 as the vehicle travels. Therefore, dew condensation on the water-cooled condenser 12, the expansion valve 13, and the chiller 14 can be prevented.

In addition, as illustrated in FIG. 2B, in a state where the HVAC unit D is mounted on the vehicle, the coolant module C is provided on the left side surface of the vehicle in the HVAC unit D. As a result, as illustrated in FIG. 2B, the ports PO1, PO2 can be provided to easily secure the introducing and sending routes of the coolant in the coolant module C. In addition, the first pump P1, the second pump P2, and the switching valve 42 are disposed on the side surface of the HVAC unit D, so that maintainability can be improved.

### [Other embodiments]

Next, other embodiments of the vehicle air conditioning system A will be described.

In the above-described embodiment, it has been described that the refrigerant module B is integrated with the HVAC unit D. However, the refrigerant module B may not be integrated with the HVAC unit D and may be provided separately (independently) from the HVAC unit D.

In the above-described embodiment, it has been described that in a state where the HVAC unit D is mounted on the vehicle, the refrigerant module B is provided on the front side of the HVAC unit D in the traveling direction of the vehicle. However, the refrigerant module B may be provided on the rear side of the HVAC unit D in the traveling direction of the vehicle, or the refrigerant module B may be provided on the left side surface or a right side surface in the HVAC unit D.

In the above-described embodiment, it has been described that in a state where the HVAC unit D is mounted on the vehicle, the coolant module C is provided on the left side surface of the vehicle in the HVAC unit D. However, the coolant module C may be provided on the right side surface of the vehicle in the HVAC unit D, or may be provided on the front side or the rear side in the traveling direction of the vehicle.

In the above-described embodiment, in FIG. 1, the water-cooled condenser 12 and the chiller 14 are illustrated as being provided separately from the HVAC unit D. However, the water-cooled condenser 12 and the chiller 14 may be provided in the HVAC unit D. In this case, the flow path through which the coolant flows from the water-cooled condenser 12 to the HVAC unit D and the flow path through which the coolant flows from the chiller 14 to the HVAC unit D can be routed more easily and further shortened.

### [Outline of above-described embodiment]

Hereinafter, an outline of the vehicle air conditioning system A described above will be described.

(1) The vehicle air conditioning system A includes: the coolant module C having the coolant flow path C1 through which a coolant that exchanges heat with a refrigerant in the water-cooled condenser 12 (condenser) and the chiller 14 (evaporator) flows; and the HVAC unit D (air conditioning unit) that performs cooling and heating of the vehicle interior, in which the coolant module C is integrated with the HVAC unit D (air conditioning unit).

According to the present configuration, since the coolant module C is integrated with the HVAC unit D, the flow path through which the coolant flows from the water-cooled condenser 12 to the HVAC unit D and the flow path through which the coolant flows from the chiller 14 to the HVAC unit D can be easily routed and shortened as compared with a case where the coolant module C is not integrated with the HVAC unit D. Therefore, since heat dissipation of the coolant flowing through the flow path can be suppressed, power cost can be improved. In addition, since the vehicle air conditioning system A can be downsized, the cabin space can be enlarged.

(2) It is preferable that the vehicle air conditioning system A according to (1) further include the refrigerant module B having the refrigerant flow path B1 that circulates the refrigerant across the water-cooled condenser 12 and the chiller 14, and the refrigerant module B be integrated with the HVAC unit D.

According to the present configuration, since the refrigerant module B is integrated with the HVAC unit D, the flow path through which the coolant flows between the coolant module C and each of the refrigerant module B and the HVAC unit D can be easily routed and shortened as compared with the case where the refrigerant module B is not integrated with the HVAC unit D. Therefore, the vehicle air conditioning system A can be further downsized, and the power cost can be improved.

(3) The vehicle air conditioning system A includes: the refrigerant module B having the refrigerant flow path B1 that circulates the refrigerant across the water-cooled condenser 12 and the chiller 14; and the HVAC unit D that performs cooling and heating of the vehicle interior, in which the refrigerant module B is integrated with the HVAC unit D.

According to the present configuration, since the refrigerant module B is integrated with the HVAC unit D, the flow path through which the refrigerant flows between the refrigerant module B and the HVAC unit D can be easily routed and shortened as compared with the case where the refrigerant module B is not integrated with the HVAC unit D. Therefore, the vehicle air conditioning system A can be further downsized, and the power cost can be improved.

(4) It is preferable that in the vehicle air conditioning system A according to (2) or (3), in a state where the HVAC unit D is mounted on the vehicle, the refrigerant module B be provided on the front side of the HVAC unit D in the traveling direction of the vehicle.

According to the present configuration, for example, the water-cooled condenser 12 and the chiller 14 can be provided in the refrigerant module B and the water-cooled condenser 12 and the chiller 14 can be disposed on the forward side of the vehicle. Therefore, traveling air can be blown to the water-cooled condenser 12 and the chiller 14 as the vehicle travels. Therefore, dew condensation on the water-cooled condenser 12 and the chiller 14 can be prevented.

(5) It is preferable that in the vehicle air conditioning system A according to (1) or (2), in a state where the HVAC unit D is mounted on the vehicle, the coolant module C be provided on a surface of the HVAC unit D on the side orthogonal to the traveling direction of the vehicle.

According to the present configuration, introducing and sending routes of the coolant in the coolant module C can be easily secured. In addition, for example, the pumps or the like for circulating the coolant can be disposed on a side surface of the HVAC unit D, so that maintainability can be improved.

(6) It is preferable that in the vehicle air conditioning system A according to (1) or (2), the HVAC unit D include the heat exchanger 52.

According to the present configuration, the flow path through which the coolant flows from the water-cooled condenser 12 to the heat exchanger 52 and the flow path through which the coolant flows from the chiller 14 to the heat exchanger 52 can be routed easily and shortened.

(7) It is preferable that in the vehicle air conditioning system A according to any one of (1) to (3), the water-cooled condenser 12 and the chiller 14 be provided in the HVAC unit D.

According to the present configuration, the flow path through which the coolant flows from the water-cooled condenser 12 to the HVAC unit D and the flow path through which the coolant flows from the chiller 14 to the HVAC unit D can be routed more easily and further shortened.

(8) It is preferable that in the vehicle air conditioning system A according to (1) or (2), the coolant module C be fixed to the HVAC unit D with a bolt and be integrated with the HVAC unit D, or be housed in the same case in which the HVAC unit D is housed and be integrated with the HVAC unit D.

According to the present configuration, since the coolant module C and the HVAC unit D are integrated, the coolant module C and the HVAC unit D can be easily assembled to the vehicle.

(9) It is preferable that in the vehicle air conditioning system A according to (3), the refrigerant module B be fixed to the HVAC unit D with a bolt and be integrated with the HVAC unit D, or be housed in the same case in which the HVAC unit D is housed and be integrated with the HVAC unit D.

According to the present configuration, the flow path through which the refrigerant flows from the water-cooled condenser 12 to the HVAC unit D and the flow path through which the refrigerant flows from the chiller 14 to the HVAC unit D can be routed more easily and further shortened.

(10) It is preferable that in the vehicle air conditioning system A according to any one of (1) to (3), in a state where the HVAC unit D is mounted on the vehicle, the water-cooled condenser 12 and the chiller 14 be provided on the front side of the HVAC unit D in the traveling direction of the vehicle.

According to the present configuration, traveling air can be blown to the water-cooled condenser 12 and the chiller 14 as the vehicle travels. Therefore, dew condensation on the water-cooled condenser 12 and the chiller 14 can be prevented.

### INDUSTRIAL APPLICABILITY

The technique according to the present disclosure can be used in a vehicle air conditioning system.

### REFERENCE SIGNS LIST

12: Water-cooled condenser (Condenser), 14: Chiller (Evaporator), 52: Heat exchanger, A: Vehicle air conditioning system, B: Refrigerant module, B1: Refrigerant flow path, C: Coolant module, C1: Coolant flow path, and D: HVAC unit (Air conditioning unit)

## Claims

1. A vehicle air conditioning system comprising:
a coolant module having a coolant flow path through which a coolant that exchanges heat with a refrigerant in a condenser and an evaporator flows; and
an air conditioning unit that performs cooling and heating of a vehicle interior,
wherein the coolant module is integrated with the air conditioning unit.

2. The vehicle air conditioning system according to claim 1 further comprising:
a refrigerant module having a refrigerant flow path that circulates a refrigerant across the condenser and the evaporator,
wherein the refrigerant module is integrated with the air conditioning unit.

3. A vehicle air conditioning system comprising:
a refrigerant module having a refrigerant flow path that circulates a refrigerant across a condenser and an evaporator; and
an air conditioning unit that performs cooling and heating of a vehicle interior,
wherein the refrigerant module is integrated with the air conditioning unit.

4. The vehicle air conditioning system according to claim 2 or 3, wherein in a state where the air conditioning unit is mounted on a vehicle, the refrigerant module is provided on a front side of the air conditioning unit in a traveling direction of the vehicle.

5. The vehicle air conditioning system according to claim 1 or 2, wherein in a state where the air conditioning unit is mounted on a vehicle, the coolant module is provided on a surface of the air conditioning unit on a side orthogonal to a traveling direction of the vehicle.

6. The vehicle air conditioning system according to claim 1 or 2, wherein the air conditioning unit includes a heat exchanger.

7. The vehicle air conditioning system according to any one of claims 1 to 3, wherein the condenser and the evaporator are provided in the air conditioning unit.

8. The vehicle air conditioning system according to claim 1 or 2, wherein the coolant module is fixed to the air conditioning unit with a bolt and is integrated with the air conditioning unit, or is housed in a same case in which the air conditioning unit is housed and is integrated with the air conditioning unit.

9. The vehicle air conditioning system according to claim 3, wherein the refrigerant module is fixed to the air conditioning unit with a bolt and is integrated with the air conditioning unit, or is housed in a same case in which the air conditioning unit is housed and is integrated with the air conditioning unit.

10. The vehicle air conditioning system according to any one of claims 1 to 3, wherein in a state where the air conditioning unit is mounted on a vehicle, a water-cooled condenser as the condenser and a chiller as the evaporator are provided on a front side of the air conditioning unit in a traveling direction of the vehicle.
